# EUROPEAN PATENT APPLICATION

(11) **EP 4 693 686 A1**
(43) Date of publication of application: **11.02.2026**
(21) Application number: 24892735.2
(22) Date of filing: 03.06.2024
(51) Int. Cl.: H01M 50/414, H01M 50/449, H01M 50/446, H01M 50/403, H01M 10/0525

(54) **SEPARATOR AND PREPARATION METHOD THEREFOR, BATTERY, AND ELECTRIC DEVICE**

(30) Priority: 24.11.2023 CN 202311594479
(71) Applicant: Contemporary Amperex Technology Co., Limited, Ningde, Fujian 352100 (CN)
(72) Inventor: LI, Lei, Ningde, Fujian 352100 (CN); ZHENG, Yi, Ningde, Fujian 352100 (CN); WANG, Shenghao, Ningde, Fujian 352100 (CN); LAI, Runhao, Ningde, Fujian 352100 (CN); SUN, Chengdong, Ningde, Fujian 352100 (CN)
(74) Representative: Jacob, Reuben Ellis
(86) International application number: PCT/CN2024/097112
(87) International publication number: WO 2025/107570

(57) **Abstract**

A separator and a preparation method therefor, a battery, and an electric device. The separator comprises polysilsesquioxane, the polysilsesquioxane having a Dv90 particle size of aµm, a Dv10 particle size of bµm, and a Dv50 particle size of cµm, where (a-b)/c ≤ 3. A secondary battery containing the separator has good cycling performance.

## Description

### PRIORITY INFORMATION

The present application claims priority to and the benefit of Patent Application No. 202311594479.1 filed with the China National Intellectual Property Administration on November 24, 2023, the entire contents of which are incorporated herein by reference.

### TECHNICAL FIELD

The present application relates to the technical field of secondary batteries, and in particular, to a separator and a preparation method therefor, a battery, and an electric device.

### BACKGROUND

Secondary batteries are used not only in energy storage power systems such as hydropower, thermal power, wind power, and solar power plants, but also in electric tools such as electric bicycles, electric motorcycles, and electric vehicles, as well as military equipment, aerospace, and many other fields.

A separator is an important component of a secondary battery. However, existing separators have poor thermal resistance and stability, and low transmission efficiency of active metal ions, resulting in poor cycle performance of secondary batteries containing the separators.

### SUMMARY

In view of technical problems existing in the background, the present application provides a separator intended to solve the problem of poor cycle performance of a battery containing the separator.

In order to achieve the above objective, a first aspect of the present application provides a separator, comprising polysilsesquioxane. The polysilsesquioxane has a Dᵥ90 particle size of *a* µm, a Dᵥ10 particle size of *b* µm, and a Dᵥ50 particle size of *c* µm, and (*a*-*b*)/*c* ≤ 3.

The present application comprises at least the following beneficial effects: In the present application, by adding the polysilsesquioxane into the separator and controlling particle size distribution of the polysilsesquioxane, channels and distances of active metal ions transmitted on the separator are similar, thereby improving transmission efficiency of the active metal ions and enhancing cycle performance of a secondary battery.

In some implementations of the present application, 0.4 ≤ (*a*-*b*)/*c* ≤ 1.5. In this way, the cycle performance of the secondary battery can be enhanced.

In some implementations of the present application, *a*=0.5 to 5, and optionally *a*=0.6 to 2.5. In this way, the cycle performance of the secondary battery can be enhanced.

In some implementations of the present application, *b* = 0.05 to 1.5, and optionally *b* = 0.1 to 1.3. In this way, the cycle performance of the secondary battery can be enhanced.

In some implementations of the present application, *c* = 0.1 to 3, and optionally *c* = 0.4 to 1.7. In this way, the cycle performance of the secondary battery can be enhanced.

In some implementations of the present application, the polysilsesquioxane has a weight-average molecular weight of 10,000 to 100,000, optionally 30,000 to 80,000. In this way, the cycle performance of the secondary battery can be enhanced.

In some implementations of the present application, the polysilsesquioxane has a density of 1 g/cm³ to 1.3 g/cm³, optionally 1 g/cm³ to 1.2 g/cm³. In this way, the cycle performance of the secondary battery can be enhanced.

In some implementations of the present application, the structural formula of the polysilsesquioxane comprises:

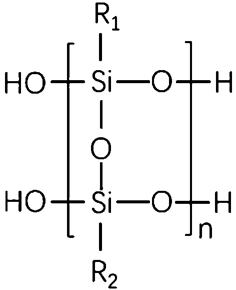

where *R₁* and *R₂* each independently comprise an alkyl group having 1 to 12 carbon atoms, an unsaturated hydrocarbon group having 1 to 12 carbon atoms or a phenyl group, and *n =* 50 to 1000.

In this way, the cycle performance of the secondary battery can be enhanced.

In some implementations of the present application, the polysilsesquioxane comprises at least one of the following structural formulas: 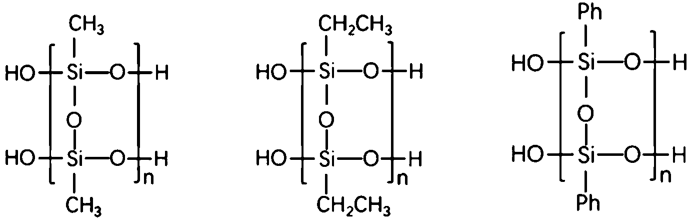 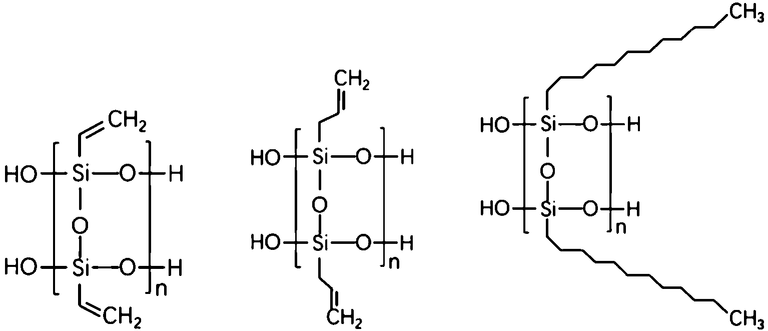 where Ph represents a phenyl group, and *n* = 50 to 1000.

In this way, the cycle performance of the secondary battery can be enhanced.

In some implementations of the present application, the separator comprises a base film and a coating layer located on at least one side of the base film, and the coating layer comprises the polysilsesquioxane. In this way, the cycle performance of the secondary battery can be enhanced.

In some implementations of the present application, the coating layer has a thickness of 0.3 µm to 3 µm, optionally 0.5 µm to 2 µm. In this way, the cycle performance of the secondary battery can be enhanced.

In some implementations of the present application, the coating layer further comprises a binder, and the binder comprises at least one of polyacrylic acid, polyacrylate, polyvinylidene fluoride, styrene-butadiene rubber, sodium carboxymethyl cellulose, polytetrafluoroethylene, vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer or fluorine-containing acrylate resin. In this way, the cycle performance of the secondary battery can be enhanced.

In some implementations of the present application, the mass ratio of the polysilsesquioxane to the binder is (5 to 25):1, optionally (8 to 20):1. In this way, the cycle performance of the secondary battery can be enhanced.

In some implementations of the present application, the base film has a thickness of 4 µm to 20 µm, optionally 5 µm to 18 µm; In this way, the cycle performance of the secondary battery can be enhanced.

In some implementations of the present application, the base film has a pore size of 0.02 µm to 0.08 µm, optionally 0.03 µm to 0.06 µm. In this way, the cycle performance of the secondary battery can be enhanced.

In some implementations of the present application, the base film has a porosity of 30% to 70%, optionally 35% to 65%. In this way, the cycle performance of the secondary battery can be enhanced.

A second aspect of the present application provides a preparation method for a separator, comprising:
preparing a separator containing polysilsesquioxane, where the polysilsesquioxane has a Dᵥ90 particle size of *a* µm, a Dᵥ10 particle size of *b* µm, and a Dᵥ50 particle size of c µm, and (*a-b*)/*c* ≤ *3.*

In this way, according to the method of the present application, the polysilsesquioxane is added and particle size distribution of the polysilsesquioxane is controlled during the preparation of the separator, thereby improving the transmission efficiency of the active metal ions and enhancing the cycle performance of the secondary battery.

In some implementations of the present application, the method comprises: preparing a coating layer on at least one side of a base film to obtain a separator, where the coating layer comprises the polysilsesquioxane. In this way, the polysilsesquioxane is provided in the coating layer, which can enhance the cycle performance of the secondary battery.

In some implementations of the present application, the polysilsesquioxane is prepared by using the following method: hydrolyzing organosiloxane monomer, adding a catalyst, and performing polycondensation under a heating condition to obtain the polysilsesquioxane. In this way, the polysilsesquioxane obtained through hydrolysis and polycondensation reaction is used in the separator, which can enhance the cycle performance of the secondary battery.

In some implementations of the present application, the temperature of hydrolysis of the organosiloxane monomer is 20°C to 30°C. In this way, the organosiloxane monomer is sufficiently hydrolyzed within the above hydrolysis temperature range, and the prepared polysilsesquioxane is used in the separator, which can enhance the cycle performance of the secondary battery.

In some implementations of the present application, the heating temperature is 30°C to 100°C, optionally 40°C to 80°C. Within the above heating temperature range, polysilsesquioxane with uniform particle size distribution can be obtained, which can enhance the cycle performance of the secondary battery.

In some implementations of the present application, the catalyst comprises at least one of aqueous ammonia, triethylamine, sodium hydroxide, magnesium hydroxide, or ammonium hydroxide. In this way, the polysilsesquioxane with uniform particle size distribution can be obtained, which can enhance the cycle performance of the secondary battery.

In some implementations of the present application, the organosiloxane monomer comprises:

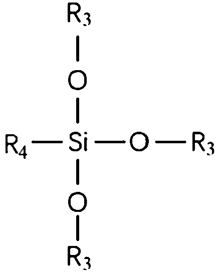

where *R₃* comprises any one of a methyl group or an ethyl group, and *R₄* comprises any one of a methyl group, an ethyl group, a phenyl group, a vinyl group, an allyl group, or a dodecyl group. In this way, the polysilsesquioxane with uniform particle size distribution can be obtained, which can enhance the cycle performance of the secondary battery.

In some implementations of the present application, the organosiloxane monomer comprises at least one of methyltrimethoxysilane, ethyltrimethoxysilane, phenyltrimethoxysilane, dodecyltrimethoxysilane, vinyltrimethoxysilane, allyltrimethoxysilane, methyltriethoxysilane, ethyltriethoxysilane, phenyltriethoxysilane, dodecyltriethoxysilane, vinyltriethoxysilane, or allyltriethoxysilane. In this way, the polysilsesquioxane with uniform particle size distribution can be obtained, which can enhance the cycle performance of the secondary battery.

A third aspect of the present application provides a battery, comprising the separator as described in the first aspect of the present application or the separator prepared by using the method as described in the second aspect of the present application. Therefore, the battery has excellent cycle performance.

A fourth aspect of the present application provides an electric device, comprising the battery described in the third aspect.

Additional aspects and advantages of the present application will be partly provided in the following description, and partly become evident in the following description or understood through the practice of the present application.

### DESCRIPTION OF DRAWINGS

Various other advantages and benefits will become clear to a person of ordinary skill in the art upon reading the detailed description of the preferred implementations below. The accompanying drawings are used only for the purpose of illustrating the preferred implementations and are not to be construed as limitations on the present application. Moreover, the same reference numerals are used to denote the same components throughout the accompanying drawings. In the accompanying drawings:
FIG. 1 is a schematic diagram of a structure of a battery according to an implementation of the present application;
FIG. 2 is a schematic diagram of a structure of a battery module according to an implementation of the present application;
FIG. 3 is a schematic diagram of a structure of a battery pack according to an implementation of the present application;
FIG. 4 is an exploded view of FIG. 3;
FIG. 5 is a schematic diagram of an implementation in which a battery is used as a power source of an electric device;
FIG. 6 is a particle size distribution diagram of polysilsesquioxane according to Embodiment 1 of the present application; and
FIG. 7 is a scanning electron microscope image of polysilsesquioxane according to Embodiment 1 of the present application.

### Description of reference signs:

1-battery pack; 2-upper case; 3-lower case; 4-battery module; and 5-battery cell.

### DESCRIPTION OF EMBODIMENTS

Embodiments of the technical solutions of the present application are described in detail below. The following embodiments are only used to more clearly illustrate the technical solutions of the present application, and thus are used as examples only, and are not intended to limit the protection range of the present application.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

For brevity, only some numerical ranges are specifically disclosed herein. However, any lower limit may be combined with any upper limit to form a range not explicitly recorded, and any lower limit may be combined with other lower limits to form a range not explicitly recorded, and likewise any upper limit may be combined with any other upper limit to form a range not explicitly recorded. In addition, each individually disclosed point or individual value may itself be combined as a lower limit or an upper limit with any other point or individual value, or with other lower or upper limits, to form a range not explicitly recorded.

Unless defined otherwise, all technical and scientific terms used herein have the same meaning as commonly understood by a person skilled in the art to which the present application belongs; the terms used herein are used for describing particular embodiments only and are not intended to limit the present application; and the terms "comprising", "including", and "having" and any variations thereof in the description, claims and the above drawings of the present application are intended to cover non-exclusive inclusion.

With the technological development and increasing demand of electric vehicles and rechargeable mobile devices, secondary batteries, as a representative of the new energy field, have witnessed rapid development in related research work. Secondary batteries have a small volume and weight, are convenient to carry and use, have a relatively high specific energy, and can provide a larger amount of energy storage; and lithium-ion batteries have no memory effect and do not need to be fully discharged and then recharged. Therefore, secondary batteries have a wide application prospect.

A separator is an important component of a secondary battery, is a thin film with a microporous structure, and plays two main roles: In one aspect, the separator separates a positive electrode sheet and a negative electrode sheet of the battery to prevent the positive electrode sheet and the negative electrode sheet from contacting and forming a short circuit; and in another aspect, micropores of the separator can allow active metal ions (such as lithium ions and sodium ions) to pass through to form a charge and discharge circuit. However, existing separators have poor thermal resistance and stability. The separators shrink severely at a temperature of 130°C to 150°C, and transmission efficiency of active metal ions is low, resulting in poor cycle performance of secondary batteries containing the separators.

In the present application, polysilsesquioxane is added to the separator, and particle size distribution ((*a*-*b*)/*c*) of the polysilsesquioxane is controlled. In one aspect, the polysilsesquioxane has excellent thermal resistance, high mechanical strength and hardness, good chemical stability, and insolubility in organic solvents, which improves the thermal resistance and the stability of the separator; and when the separator shrinks due to heat, uniform polysilsesquioxane particles rapidly contact and squeeze each other, which can provide a force opposite to a shrinkage direction of the separator, thereby reducing a shrinkage degree of the separator to enhance deformation resistance of the separator, and reducing a probability of short circuit between the positive electrode sheet and the negative electrode sheet in a secondary battery. In another aspect, the polysilsesquioxane *(a-b)*/*c* of the present application is within the above range, particle sizes are uniform, and spacings between polysilsesquioxane particles are uniform, so that the separator is relatively flat, and channels and distances of active metal ions transmitted on the separator are similar, thereby improving the transmission efficiency of active metal ions and enhancing the cycle performance of the secondary battery.

The separator disclosed in the embodiments of the present application is applicable to the secondary battery, and the battery disclosed in the embodiments of the present application can be used in an electric device using a battery as a power source or various energy storage systems using a battery as an energy storage element. The electric device may include, but is not limited to, a mobile phone, a tablet computer, a notebook computer, an electric toy, an electric tool, a battery-powered vehicle, an electric vehicle, a ship, a spacecraft, and the like. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

A first aspect of the present application provides a separator, including polysilsesquioxane. The polysilsesquioxane has a Dᵥ90 particle size of *a* µm, a Dᵥ10 particle size of *b* µm, and a Dᵥ50 particle size of c µm, and (*a-b*)/*c* ≤ 3.

The present application includes at least the following beneficial effects: Polysilsesquioxane is added to the separator, and particle size distribution of the polysilsesquioxane is controlled. In one aspect, the polysilsesquioxane has excellent thermal resistance, high mechanical strength and hardness, good chemical stability, and insolubility in organic solvents, which improves the thermal resistance and the stability of the separator; and when the separator shrinks due to heat, uniform polysilsesquioxane particles rapidly contact and squeeze each other, which can provide a force opposite to a shrinkage direction of the separator, thereby reducing a shrinkage degree of the separator to enhance deformation resistance of the separator, and reducing an occurrence probability of short circuit between a positive electrode sheet and a negative electrode sheet in a secondary battery. In another aspect, particle sizes of the polysilsesquioxane in the present application are uniform, and spacings between polysilsesquioxane particles are uniform, so that the separator is relatively flat, breathability of the separator is enhanced, and channels and distances of active metal ions transmitted on the separator are similar, thereby improving the transmission efficiency of active metal ions and enhancing the cycle performance of the secondary battery.

It can be understood that the polysilsesquioxane in the embodiments of the present application has dual characteristics of organic and inorganic, has characteristics of high wear resistance, high hardness, high melting point, and the like, and has higher thermal resistance and lower surface energy than a general organosilicon polysiloxane, which can make a silicon carbon material capable of oxidative degradation resistance deposited on the surface of the separator, reduce oxygen contact, and slow down heat transfer to achieve a flame retardant effect, thereby further enhancing the thermal resistance of the battery.

It can be understood that, in the embodiments of the present application, the Dᵥ90 particle size is a particle size corresponding to a cumulative volume distribution percentage reaching 90%, that is, a volume content of particles smaller than this particle size accounts for 90% of all particles; the Dᵥ50 particle size is a particle size corresponding to the cumulative volume distribution percentage reaching 50%, that is, a volume content of particles larger than this particle size accounts for 50% of all particles, and a volume content of particles smaller than this particle size also accounts for 50% of all particles; the Dᵥ10 particle size is a particle size corresponding to the cumulative volume distribution percentage reaching 10%, that is, a volume content of particles smaller than this particle size accounts for 10% of all particles; and the above three particle size values can be determined by using instruments and methods well known in the art, for example, by using a laser particle size analyzer (such as the Malvern Master Size 3000) with reference to the standard GB/T 19077-2016.

It can be understood that (a-b)/c can be interpreted as a span of the particle size distribution of the polysilsesquioxane, which is a measurement of the width of the particle size distribution of the polysilsesquioxane, and a span closer to 0 represents a more uniform particle size and higher size consistency. In the embodiments of the present application, for example, the value of (*a-b*)/*c* may be 0.01 to 3, 0.1 to 2.9, 0.2 to 2.8, 0.4 to 2.5, 0.7 to 2.3, 1 to 2, 1.3 to 1.8, 1.5 to 1.5, or the like. When (*a*-*b*)/*c* is within the above range, the spacings between polysilsesquioxane particles are uniform, so that the separator is relatively flat, breathability of the separator is enhanced, and channels and distances of active metal ions transmitted on the separator are similar, thereby improving the transmission efficiency of active metal ions, and enhancing the cycle performance of the secondary battery. In some other implementations of the present application, 0.4 ≤ (*a-b*)/*c ≤* 1.5.

In some implementations of the present application, *a =* 0.5 to 5. For example, *a* may be 0.5 to 4.9, 0.7 to 4.5, 1 to 4, 1.3 to 3.8, 1.5 to 3.5, 1.8 to 3.3, 2 to 3, or 2.5 to 2.8. In this way, the Dᵥ90 particle size of the polysilsesquioxane is within the range of 0.5 µm to 5 µm, which can improve the thermal resistance and the stability of the separator, and reduce the occurrence probability of short circuit between the positive electrode sheet and the negative electrode sheet in the secondary battery, thereby improving the transmission efficiency of active metal ions. In addition, a probability that the polysilsesquioxane blocks the micropores on the separator can be reduced, thereby enhancing the cycle performance of the secondary battery. In some other implementations of the present application, *a* = 0.6 to 2.5.

In some implementations of the present application, *b =* 0.05 to 1.5. For example, *b* may be 0.05 to 1.49, 0.1 to 1.45, 0.2 to 1.4, 0.3 to 1.3, 0.4 to 1.2, 0.5 to 1.1, 0.6 to 1, 0.7 to 0.9, or 0.8 to 0.9. Specifically, the Dᵥ10 particle size of the polysilsesquioxane is within the range of 0.05 µm to 1.5 µm, which can improve the thermal resistance and the stability of the separator, and reduce the occurrence probability of short circuit between the positive electrode sheet and the negative electrode sheet in the secondary battery, thereby improving the transmission efficiency of active metal ions. In addition, the probability that the polysilsesquioxane blocks the micropores on the separator can be reduced, thereby enhancing the cycle performance of the secondary battery. In some other implementations of the present application, *b =* 0.1 to 1.3.

In some implementations of the present application, *c* = 0.1 to 3. For example, c may be 0.1 to 2.9, 0.3 to 2.7, 0.5 to 2.5, 0.7 to 2.3, 1 to 2, 1.2 to 1.8, or 1.5 to 1.7. Specifically, the Dᵥ50 particle size of the polysilsesquioxane is within the range of 0.1 µm to 3 µm, which can improve the thermal resistance and the stability of the separator, and reduce the occurrence probability of short circuit between the positive electrode sheet and the negative electrode sheet in the secondary battery, thereby improving the transmission efficiency of active metal ions. In addition, the probability that the polysilsesquioxane blocks the micropores on the separator can be reduced, thereby enhancing the cycle performance of the secondary battery. In some other implementations of the present application, *c* = 0.4 to 1.7.

In some implementations of the present application, the polysilsesquioxane has a weight-average molecular weight of 10,000 to 100,000. For example, the weight-average molecular weight of the polysilsesquioxane may be 10,000 to 99,000, 15,000 to 95,000, 20,000 to 90,000, 30,000 to 80,000, 40,000 to 70,000, or 50,000 to 60,000. In this way, the weight-average molecular weight of the polysilsesquioxane is within the above range, and polysilsesquioxane with uniform particle size distribution can be obtained, which improves the thermal resistance and the stability of the separator, and reduces the occurrence probability of short circuit between the positive electrode sheet and the negative electrode sheet in the secondary battery, thereby improving the transmission efficiency of active metal ions. In addition, the probability that the polysilsesquioxane blocks the micropores on the separator can be reduced, thereby enhancing the cycle performance of the secondary battery. In some other implementations of the present application, the polysilsesquioxane has a weight-average molecular weight of 30,000 to 80,000.

It can be understood that the "weight-average molecular weight of the polysilsesquioxane" has a meaning well known in the art, and may be determined by using an instrument or a method well known in the art. For example, the weight-average molecular weight of the polysilsesquioxane may be obtained by using the following method:

The weight-average molecular weight of the polysilsesquioxane is determined with reference to the standard GB/T21863-2008 gel permeation chromatography. Specifically, in the embodiments of the present application, determination may be performed in following manners: an ultra-high performance polymer chromatograph (ACQUITYAPC) and a detector (ACQUITY differential refractive index detector) were used.

Parameter setting, injection volume: 0 µL to 50 µL (depending on a sample concentration); pump flow rate: 0.2 mL/min; mobile phase: 30 mol/L LiBr in NMP (N-methylpyrrolidone) solution; sealing cleaning liquid: isopropanol; pre-column: PLgel10umMiniMIX-BGuard (size: 50 mm × 4.6 mm × 2); analytical phase: PLgel10umMiniMIX-B (size: 250 mm × 4.6 mm); standard: polystyrene sleeve; running time: 30 min; detector: ACQUITY differential refractive index (RI) detector; column oven temperature: 90°C; and detector temperature: 55°C.

Sample test: a. standard sample and test sample configuration: 0.002 g to 0.004 g of standard sample/test sample was separately weighed and added to 2 mL of mobile phase liquid, mixed standard of 0.1% to 0.5% was prepared, and placed in a refrigerator for > 8h; and b. standard solution/sample test: a sample group to be tested was edited, an established sample group method was selected, and after the baseline is stable, a run queue was clicked and a sample was started testing.

Data processing: based on a relationship between retention time and molecular weight, a calibration curve was established by using a chemical workstation, a sample spectrum was integrated and quantified, and the chemical workstation automatically generated molecular weight and molecular weight distribution results.

In some implementations of the present application, the polysilsesquioxane has a density of 1 g/cm³ to 1.3 g/cm³. For example, the density of the polysilsesquioxane may be 1 g/cm³ to 1.29 g/cm³, 1.05 g/cm³ to 1.25 g/cm³, 1.08 g/cm³ to 1.23 g/cm³, 1.1 g/cm³ to 1.2 g/cm³, 1.15 g/cm³ to 1.18 g/cm³, or the like. In this way, the density of the polysilsesquioxane is within the above range, and is relatively low, and the use of the polysilsesquioxane on the separator can reduce the weight of the battery and increase an energy density. In addition, on the premise of meeting the thermal resistance requirements, the breathability of the separator can be improved, and the cycle performance of the battery using the separator can also be enhanced.

It can be understood that the "density of the polysilsesquioxane" is a mass of per unit "actual volume of solid matter (excluding open pores and closed pores and pores between particles)" in a dense state. The density of the polysilsesquioxane can be obtained by using the following method:

Determination was performed with reference to the standard GB/T24586: a specific mass of sample was weighed and placed in a true density tester, a test system was sealed, helium was introduced according to a procedure, the pressure of the gas in a sample chamber and an expansion chamber was detected, a real volume was then calculated according to the Bohr's law (PV = nRT), and the density was calculated based on the volume and the mass; and the national standard: GB/T24586 Determination of apparent density, true density and porosity of iron ore.

In some implementations of the present application, the structural formula of the polysilsesquioxane includes: 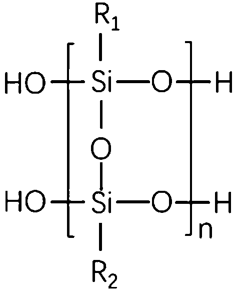 where *R₁* and *R₂* each independently include an alkyl group having 1 to 12 carbon atoms, an unsaturated hydrocarbon group having 1 to 12 carbon atoms or a phenyl group, and *n* = 50 to 1000.

For example, *R₁* and *R₂* each independently include an alkyl group having 1 to 12 carbon atoms, an alkyl group having 2 to 11 carbon atoms, an alkyl group having 3 to 10 carbon atoms, an alkyl group having 4 to 9 carbon atoms, an alkyl group having 5 to 8 carbon atoms, an alkyl group having 6 to 7 carbon atoms, or the like; *R₁* and *R₂* each independently include an unsaturated hydrocarbon group having 1 to 12 carbon atoms, an unsaturated hydrocarbon group having 2 to 11 carbon atoms, an unsaturated hydrocarbon group having 3 to 10 carbon atoms, an unsaturated hydrocarbon group having 4 to 9 carbon atoms, an unsaturated hydrocarbon group having 5 to 8 carbon atoms, an unsaturated hydrocarbon group having 6 to 7 carbon atoms, or the like; and *n =* 50 to 999, *n =* 100 to 950, *n* = 200 to 900, *n* = 300 to 800, *n* = 400 to 700, *n =* 500 to 600, or the like. In this way, by using the polysilsesquioxane with the above structural formula, the thermal resistance and the stability of the separator are improved, the occurrence probability of short circuit between the positive electrode sheet and the negative electrode sheet in the secondary battery is reduced, thereby improving the transmission efficiency of active metal ions. In addition, the probability that the polysilsesquioxane blocks the micropores on the separator can be reduced, thereby enhancing the cycle performance of the secondary battery.

In some implementations of the present application, the polysilsesquioxane includes at least one of the following structural formulas: 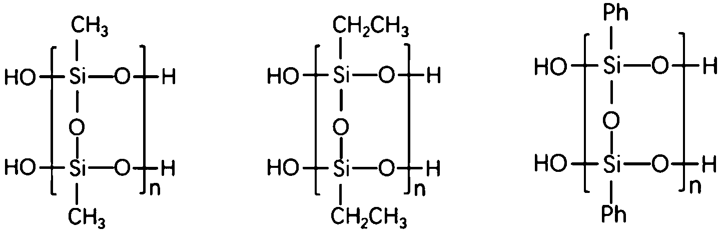 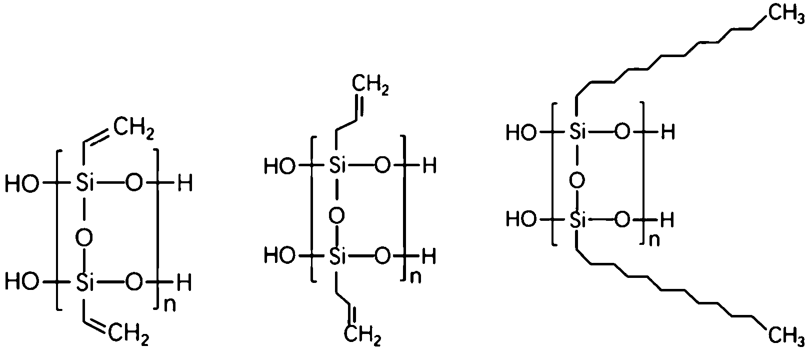 where Ph represents a phenyl group, and *n* = 50 to 1000.

For example, *n* = 50 to 999, *n* = 100 to 950, *n* = 200 to 900, *n* = 300 to 800, *n* = 400 to 700, *n* = 500 to 600, or the like, and it can be understood that values of *n* in the above structural formulas are independent of each other, and may be equal or unequal.

In this way, by using the polysilsesquioxane with the above structural formula, the thermal resistance and the stability of the separator are improved, the occurrence probability of short circuit between the positive electrode sheet and the negative electrode sheet in the secondary battery is reduced, thereby improving the transmission efficiency of active metal ions. In addition, the probability that the polysilsesquioxane blocks the micropores on the separator can be reduced, thereby enhancing the cycle performance of the secondary battery.

In some implementations of the present application, the separator includes a base film and a coating layer located on at least one side of the base film, and the coating layer includes the polysilsesquioxane. In this way, by providing the polysilsesquioxane in the coating layer, the probability that the polysilsesquioxane blocks micropores of the base film can be reduced. In addition, the coating layer includes the polysilsesquioxane to form a thermal-resistant coating layer, and when the base film shrinks due to heat, uniform polysilsesquioxane particles in the coating layer rapidly contact and squeeze each other, which can provide a force opposite to a shrinkage direction of the separator, thereby reducing a shrinkage degree of the separator to enhance deformation resistance of the separator, and reducing the occurrence probability of short circuit between the positive electrode sheet and the negative electrode sheet in the secondary battery. Spacings between polysilsesquioxane particles are uniform, so that the separator is relatively flat, breathability of the separator is enhanced, and channels and distances of active metal ions transmitted on the separator are similar, thereby improving the transmission efficiency of active metal ions and enhancing the cycle performance of the secondary battery.

In some implementations of the present application, the coating layer has a thickness of 0.3 µm to 3 µm. For example, the thickness of the coating layer may be 0.3 µm to 2.9 µm, 0.5 µm to 2.7 µm, 0.7 µm to 2.5 µm, 1 µm to 2.3 µm, 1.3 µm to 2 µm, or 1.5 µm to 2.8 µm. In this way, the thickness of the coating layer is within the above range, and when the base film shrinks due to heat, uniform polysilsesquioxane particles in the coating layer rapidly contact and squeeze each other, which can provide a force opposite to a shrinkage direction of the separator, thereby reducing a shrinkage degree of the separator to enhance deformation resistance of the separator, and reducing the occurrence probability of short circuit between the positive electrode sheet and the negative electrode sheet in the secondary battery. Spacings between polysilsesquioxane particles are uniform, so that the separator is relatively flat, breathability of the separator is enhanced, and channels and distances of active metal ions transmitted on the separator are similar, thereby improving the transmission efficiency of active metal ions, and enhancing the cycle performance of the secondary battery. In some other implementations of the present application, the coating layer has a thickness of 0.5 µm to 2 µm.

In some implementations of the present application, the coating layer further includes a binder, and the binder includes at least one of polyacrylic acid, polyacrylate, polyvinylidene fluoride, styrene-butadiene rubber, sodium carboxymethyl cellulose, polytetrafluoroethylene, vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer or fluorine-containing acrylate resin. In this way, by adding the above binder, the polysilsesquioxane can be firmly fixed on the base film, which reduces the probability of the polysilsesquioxane falling off, and reduces the occurrence probability of short circuit between the positive electrode sheet and the negative electrode sheet in the secondary battery, thereby improving the transmission efficiency of active metal ions and, enhancing the cycle performance of the secondary battery.

In some implementations of the present application, the mass ratio of the polysilsesquioxane to the binder is (5 to 25):1. For example, the mass ratio of the polysilsesquioxane to the binder may be (5 to 24):1, (7 to 21):1, (10 to 20):1, (12 to 19):1, (13 to 18):1, or (15 to 17):1. In this way, the mass ratio of the polysilsesquioxane to the binder is controlled within the above range, and the polysilsesquioxane can be firmly fixed on the base film, which reduces the probability of the polysilsesquioxane falling off, and reduces the occurrence probability of short circuit between the positive electrode sheet and the negative electrode sheet in the secondary battery, thereby improving the transmission efficiency of active metal ions, and enhancing the cycle performance of the secondary battery. In some other implementations of the present application, the mass ratio of the polysilsesquioxane to the binder is (8 to 20):1.

In some implementations of the present application, the base film has a thickness of 4 µm to 20 µm. For example, the thickness of the base film may be 4 µm to 19 µm, 5 µm to 18 µm, 6 µm to 17 µm, 7 µm to 16 µm, 8 µm to 15 µm, 9 µm to 14 µm, 10 µm to 13 µm, or 11 µm to 12 µm. In this way, the thickness of the base film is controlled within the above range, thereby improving the transmission efficiency of active metal ions, and enhancing the cycle performance of the secondary battery. In some other implementations of the present application, the base film has a thickness of 5 µm to 18 µm.

In some implementations of the present application, the base film has a pore size of 0.02 µm to 0.08 µm. For example, the pore size of the base film may be 0.02 µm to 0.079 µm, 0.03 µm to 0.07 µm, 0.04 µm to 0.07 µm, 0.04 µm to 0.06 µm, or 0.04 µm to 0.05 µm. By controlling the pore size of the base film within the above range, the probability that the polysilsesquioxane blocks the micropores of the base film can be reduced, thereby improving the transmission efficiency of active metal ions, and enhancing the cycle performance of the secondary battery. In some other implementations of the present application, the base film has a pore size of 0.03 µm to 0.06 µm.

In some implementations of the present application, the base film has a porosity of 30% to 70%. For example, the porosity of the base film may be 30% to 69%, 35% to 65%, 40% to 60%, 45% to 55%, or 50% to 55%. In this way, the porosity of the base film is controlled within the above range, which can reduce the probability that the polysilsesquioxane blocks the micropores of the base film, thereby improving the transmission efficiency of active metal ions and enhancing the cycle performance of the secondary battery. In some other embodiment of the present application, the base film has a porosity of 35% to 65%.

A second aspect of the present application provides a preparation method for a separator, including:
S10: preparing a separator containing polysilsesquioxane, where the polysilsesquioxane has a Dᵥ90 particle size of *a* µm, a Dᵥ10 particle size of *b* µm, and a Dᵥ50 particle size of c µm, and (*a*-*b*)/*c* ≤ 3*.*

By adopting the method in the present application, during the preparation of the separator, the polysilsesquioxane is added to the separator and particle size distribution of the polysilsesquioxane is controlled. In one aspect, the polysilsesquioxane has excellent thermal resistance, high mechanical strength and hardness, good chemical stability, and insolubility in organic solvents, which improves the thermal resistance and the stability of the separator; and when the separator shrinks due to heat, uniform polysilsesquioxane particles rapidly contact and squeeze each other, which can provide a force opposite to a shrinkage direction of the separator, thereby reducing a shrinkage degree of the separator to enhance deformation resistance of the separator, and reducing the occurrence probability of short circuit between the positive electrode sheet and the negative electrode sheet in the secondary battery. In another aspect, particle sizes of the polysilsesquioxane in the present application are uniform, and spacings between polysilsesquioxane particles are uniform, so that the separator is relatively flat, breathability of the separator is enhanced, and channels and distances of active metal ions transmitted on the separator are similar, thereby improving the transmission efficiency of active metal ions, and enhancing the cycle performance of the secondary battery.

In some embodiments of the present application, the method includes:
S 100: preparing a coating layer on at least one side of a base film to obtain a separator, where the coating layer includes the polysilsesquioxane.

Through the above method, by providing the polysilsesquioxane in the coating layer, the probability that the polysilsesquioxane blocks the micropores of the base film can be reduced. In addition, the coating layer includes the polysilsesquioxane to form a thermal-resistant coating layer, and when the base film shrinks due to heat, uniform polysilsesquioxane particles in the coating layer rapidly contact and squeeze each other, which can provide a force opposite to a shrinkage direction of the separator, thereby reducing a shrinkage degree of the separator to enhance deformation resistance of the separator, and reducing the occurrence probability of short circuit between the positive electrode sheet and the negative electrode sheet in the secondary battery. Spacings between polysilsesquioxane particles are uniform, so that the separator is relatively flat, breathability of the separator is enhanced, and channels and distances of active metal ions transmitted on the separator are similar, thereby improving the transmission efficiency of active metal ions, and enhancing the cycle performance of the secondary battery.

In some implementations of the present application, the polysilsesquioxane is prepared by using the following method:
S101: hydrolyzing organosiloxane monomer, adding a catalyst, and performing polycondensation under a heating condition to obtain the polysilsesquioxane.

In this way, the polysilsesquioxane obtained through hydrolysis and polycondensation reaction has uniform particle size distribution (that is, (*a*-*b*)/*c* is small) and is used in the separator, which can enhance deformation resistance of the separator, and reduce the occurrence probability of short circuit between the positive electrode sheet and the negative electrode sheet in the secondary battery; and particle sizes of the polysilsesquioxane are uniform, and spacings between polysilsesquioxane particles are uniform, so that the separator is relatively flat, and channels and distances of active metal ions transmitted on the separator are similar, thereby improving the transmission efficiency of active metal ions, and enhancing the cycle performance of the secondary battery.

In some implementations of the present application, the temperature of hydrolysis of the organosiloxane monomer is 20°C to 30°C. For example, the temperature of hydrolysis may be 20°C to 29°C, 21°C to 28°C, 22°C to 27°C, 23°C to 26°C, or 24°C to 25°C. In this way, the organosiloxane monomer is sufficiently hydrolyzed within the above hydrolysis temperature range, and the prepared polysilsesquioxane is used in the separator, which can enhance the cycle performance of the secondary battery.

In some implementations of the present application, the heating temperature is 30°C to 100°C. For example, the heating temperature may be 30°C to 99°C, 35°C to 95°C, 40°C to 90°C, 45°C to 85°C, 50°C to 80°C, 55°C to 75°C, or 60°C to 70°C. Within the above heating temperature range, polysilsesquioxane with uniform particle size distribution can be obtained, which can enhance the cycle performance of the secondary battery. In some implementations of the present application, the heating temperature is 40°C to 80°C;

Specifically, the organosiloxane monomer is first hydrolyzed to generate silanol, and concurrently alcohol is released to form a mixed solution, the alcohol increasing solubility of the organosiloxane monomer in the solution; and then under the action of the catalyst, the silanol starts to be polycondensed, a Si-O-Si bond is formed between silanol and silanol, a network structure is further formed, and nucleation starts at this time. Finally, these nuclei continuously absorb silanol from the solution and continue to grow until the nuclei grow into polysilsesquioxane. A nucleation process and a nucleus growth process are competitive with each other, and a reaction temperature may affect these two processes. When the nucleation process is dominant, more nuclei are generated and the particle size of the final polysilsesquioxane is relatively small; and when the nucleus growth process is dominant, the particle size of the final microsphere is relatively large. An increase in temperature intensifies the progress of a reaction, so that more nuclei are generated and more silanol is consumed at the beginning of the reaction, thereby limiting the growth of nuclei at a later phase, and making the particle size of the polysilsesquioxane finally generated smaller. By controlling the heating temperature within the range of 30°C to 100°C, (*a*-*b*)/*c* can be reduced, the particle size of the polysilsesquioxane can be made uniform, and the cycle performance of the secondary battery can be enhanced.

In some implementations of the present application, the catalyst includes at least one of aqueous ammonia, triethylamine, sodium hydroxide, magnesium hydroxide, or ammonium hydroxide. In this way, the catalyst can continuously and efficiently catalyze polycondensation of the hydrolyzed organosiloxane monomer, and the polysilsesquioxane with uniform particle size distribution can be obtained, which can enhance the cycle performance of the secondary battery.

In some implementations of the present application, the organosiloxane monomer includes: 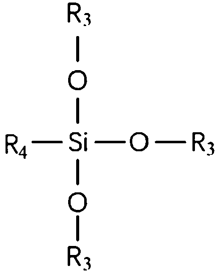 where *R₃* includes any one of a methyl group or an ethyl group, and *R₄* includes any one of a methyl group, an ethyl group, a phenyl group, a vinyl group, an allyl group, or a dodecyl group. In this way, the organosiloxane monomer can be hydrolyzed and polycondensed to obtain polysilsesquioxane with uniform particle size distribution, which can enhance the cycle performance of the secondary battery.

In some implementations of the present application, the organosiloxane monomer includes at least one of methyltrimethoxysilane, ethyltrimethoxysilane, phenyltrimethoxysilane, dodecyltrimethoxysilane, vinyltrimethoxysilane, allyltrimethoxysilane, methyltriethoxysilane, ethyltriethoxysilane, phenyltriethoxysilane, dodecyltriethoxysilane, vinyltriethoxysilane, or allyltriethoxysilane. In this way, the organosiloxane monomer can be hydrolyzed and polycondensed to obtain polysilsesquioxane with uniform particle size distribution, which can enhance the cycle performance of the secondary battery.

Specifically, an example in which *R₃* is a methyl group and *R₄* is a methyl group is used, the hydrolysis and polycondensation reaction process of the organosiloxane monomer is as follows:

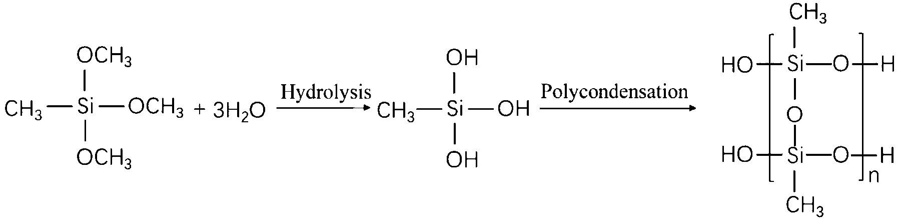

For the above base film, the present application has no particular limitation and any well-known porous structure base film with electrochemical stability and mechanical stability can be selected according to actual needs. The base film can include, for example, a single-layer or multi-layer film containing at least one of glass fiber, non-woven fabric, polyethylene, polypropylene, polyvinylidene fluoride, polyimide, polytetrafluoroethylene, and an aramid film.

A third aspect of the present application provides a battery, including the separator as described in the first aspect of the present application or the separator prepared by using the method as described in the second aspect. Therefore, the battery has an excellent cycle life.

A battery is a battery that may be used continuously by activating an active material by means of charging after discharging the battery.

It can be understood that the battery provided in the present application may be a lithium-ion battery or a sodium-ion battery.

In general, a battery includes a positive electrode sheet, a negative electrode sheet, a separator, and an electrolyte solution. During charge and discharge of the battery, active metal ions are intercalated and deintercalated back and forth between the positive electrode sheet and the negative electrode sheet. The separator is disposed between the positive electrode sheet and the negative electrode sheet to play a separating role. The electrolyte functions to conduct active metal ions between the positive electrode sheet and the negative electrode sheet.

### [Positive electrode sheet]

The positive electrode sheet includes a positive current collector and a positive electrode active material layer disposed on at least one surface of the positive current collector, and the positive electrode active material layer includes a positive electrode active material.

As an example, the positive current collector has two surfaces opposite to each other in its own thickness direction, and the positive electrode active material layer is disposed on either one or both of the two opposite surfaces of the positive current collector.

In some implementations of the present application, the positive electrode sheet includes a positive electrode current collector, the positive electrode current collector may use a metal foil, a foamed metal, or a composite current collector. For example, as the metal foil, aluminum or stainless steel which is subjected to surface treatment by silver, stainless steel, copper, aluminum, carbon electrode, carbon, nickel, titanium, or the like can be employed. The composite current collector may include a high-molecular material base layer and a metal layer. The foamed metal may be foamed nickel, foamed copper, foamed aluminum, foamed alloy, or the like. The composite current collector may be formed by forming a metal material (aluminum, an aluminum alloy, nickel, a nickel alloy, titanium, a titanium alloy, silver, a silver alloy, or the like) on a substrate of a high-molecular material (a substrate of polypropylene, polyethylene terephthalate, polybutylene terephthalate, polystyrene, polyethylene, or the like).

In some implementations of the present application, the positive electrode sheet may further include a positive electrode active material layer, and the positive electrode active material layer includes a positive electrode active material. A specific type of the positive electrode active material is not limited, and an active material which can be used for a positive electrode of a battery known in the art may be used, and any person skilled in the art may select the material according to actual requirements.

When the battery is a lithium-ion battery, as an example, the positive electrode active material may include, but is not limited to, at least one of lithium transition metal oxide, olivine-structured lithium-containing phosphate, and respective modified compounds thereof. Examples of the lithium transition metal oxide may include, but are not limited to, at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Examples of the olivine-structured lithium-containing phosphate may include, but are not limited to, at least one of lithium iron phosphate, a composite of lithium iron phosphate and carbon, lithium manganese phosphate, a composite of lithium manganese phosphate and carbon, lithium ferric manganese phosphate, a composite of lithium ferric manganese phosphate and carbon, and modified compounds thereof. These materials are all commercially available.

When the battery is a sodium-ion battery, as an example, the positive electrode active material may include, but is not limited to, at least one of a layered transition metal oxide, a polyanionic compound, and a Prussian blue analog.

As an example of the layered transition metal oxide, the following can be listed:
Na₁₋ₓCuₕFeₖMnₗM¹ₘO_{2-y}, where M¹ is at least one of Li, Be, B, Mg, Al, K, Ca, Ti, Co, Ni, Zn, Ga, Sr, Y, Nb, Mo, In, Sn, and Ba; and 0 < *x* ≤ 0.33, 0 < *h* ≤ 0.24, 0 ≤ *k* ≤ 0.32, 0 < *l* ≤ 0.68, 0 ≤*m* < 0.1, *h* + *k* + *l* + *m* = 1, and 0 ≤ *y* < 0.2;
Na_{0.67}Mn_{0.7}NiM² _{0. 3-z}O₂, where M² is at least one of Li, Mg, Al, Ca, Ti, Fe, Cu, Zn, and Ba; and 0 < *z* ≤ 0.1; and
NaₐLi_{b}Ni_{c}Mn_{d}FeₑO₂, where 0.67 < *a* ≤ 1, 0 *< b <* 0.2, 0 < c < 0.3, 0.67 < *d + e <* 0.8, and *b + c + d + e =* 1.

As an example of the polyanionic compound, the following can be listed:
A¹_{f}M³_{g}(PO₄)ᵢOⱼX¹₃₋ⱼ, where A¹ is at least one of H, Li, Na, K, and NH₄, M³ is at least one of Ti, Cr, Mn, Fe, Co, Ni, V, Cu, and Zn; X¹ is at least one of F, Cl, and Br; and 0 < *f* ≤ 4, 0 < *g* ≤ 2, 1 ≤ *i* ≤ 3, and 0 ≤ *j* ≤ 2;
NaₙM⁴PO₄X², where M⁴ is at least one of Mn, Fe, Co, Ni, Cu, and Zn; X² is at least one of F, Cl, and Br; and 0 < *n* ≤ 2;
NaₚM⁵_{q}(SO₄)₃, where M⁵ is at least one of Mn, Fe, Co, Ni, Cu, and Zn; and 0 *<p* ≤ 2, and 0 <*q* ≤ 2; and
NaₛMnₜFe₃₋ₜPO₄)₂(P₂O₇), where 0 < *s* ≤ 4, 0 ≤ *t* ≤ 3, and for example, *t* is 0, 1, 1.5, 2, or 3.

As an example of the Prussian blue analog, the following can be listed:
AᵤM⁶ᵥ[M⁷(CN)₆]_{w}·xH₂O, where A is at least one of H⁺, NH₄⁺, an alkali metal cation, and an alkaline earth metal cation; M⁶ and M⁷ are each independently at least one of transition metal cations; and 0 < *u* ≤ 2, 0 < *v* ≤ 1, 0 < *w* ≤ 1, and 0 < *x* < 6. For example, A is at least one of H⁺, Li⁺, Na⁺, K⁺, NH₄⁺, Rb⁺, Cs⁺, Fr⁺, Be²⁺, Mg²⁺, Ca²⁺, Sr²⁺, Ba²⁺, and Ra²⁺; and M⁶ and M⁷ are each independently a cation of at least one transition metal element of Ti, V, Cr, Mn, Fe, Co, Ni, Cu, Zn, Sn, and W.

Deintercalation and consumption of Li or Na occur during charging and discharging of the battery, and the molar content of Li or Na varies when the battery is discharged to different states. In the enumeration of the positive electrode material in the embodiments of the present application, the molar content of Li or Na is an initial state of the material, that is, a state before adding. The positive electrode material is applied to a battery system, and the molar content of Li or Na changes after charging and discharging cycles.

In the enumeration of the positive electrode material in the embodiments of the present application, the molar content of O is only a theoretical state value, the molar content of oxygen changes due to the release of oxygen from a lattice, and the actual molar content of O fluctuates.

The modified compounds of each material may be a compound of the material subjected to doping modification and/or surface coating modification.

The positive electrode active material layer generally optionally includes a binder, a conductive agent, and other optional auxiliaries.

As an example, the conductive agent may include at least one of superconducting carbon, acetylene black, carbon black, ketjen black, carbon dots, carbon nanotubes, Super P (SP), graphene, and carbon nanofibers.

As an example, the binder may include at least one of styrene-butadiene rubber (SBR), water-based acrylic resin, polyvinylidene fluoride (PVDF), polytetrafluoroethylene (PTFE), ethylene-vinyl acetate copolymer (EVA), polyacrylic acid (PAA), carboxymethyl cellulose (CMC), polyvinyl alcohol (PVA), and polyvinyl butyral (PVB).

### [Positive electrode sheet]

In some implementations of the present application, the negative electrode sheet includes a negative current collector and a negative electrode active material layer disposed on at least one side of the negative current collector.

As an example, the negative current collector has two surfaces opposite in the thickness direction of the negative current collector, and the negative electrode active material layer is provided on either one or both of the two opposite surfaces of the negative current collector.

In some implementations, the negative pole current collector may use a metal foil or a composite current collector. For example, a copper foil may be used as the metal foil. The composite current collector may include a polymer material base layer and a metal layer formed on at least one surface of a polymer material substrate. The composite current collector may be formed by forming a metal material (copper, a copper alloy, nickel, a nickel alloy, titanium, a titanium alloy, silver, a silver alloy, or the like) on the polymer material substrate (e.g., a substrate of polypropylene (PP), polyethylene terephthalate (PET), polybutylene terephthalate (PBT), polystyrene (PS), or polyethylene (PE)).

In some embodiments, the negative pole active material may be a negative pole active material well-known in the art for batteries. As an example, the negative pole active material may include at least one of the following materials: synthetic graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and another conventional material that can be used as a negative electrode active material of a battery may also be used. These negative electrode active materials may be used alone or in combination of two or more thereof.

In some implementations, the negative electrode active material layer further optionally includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some implementations, the negative electrode active material layer further optionally includes a conductive agent. The conductive agent may be selected from at least one of superconducting carbon, acetylene black, carbon black, Ketjen black, carbon dots, carbon nanotubes, graphene, and carbon nanofibers.

In some implementations, the negative electrode active material layer further optionally includes other auxiliaries, for example, a thickener (such as sodium carboxymethyl cellulose (CMC-Na)).

In some embodiments, the negative pole piece may be prepared in the following manner: dispersing the above-mentioned components for preparing the negative pole piece, for example, the negative pole active material, the conductive agent, the binder, and any other component in a solvent (e.g., deionized water) to form a negative pole paste; and coating the negative pole paste on the negative pole current collector, and performing procedures such as drying and cold pressing, to obtain the negative pole piece.

### [Electrolyte solution]

The electrolyte solution may include an electrolyte salt and a solvent.

As an example, when the battery is a lithium-ion battery, the electrolyte lithium salt may include at least one of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluorobis(oxalato)phosphate (LiDFOP), and lithium tetrafluoro(oxalato)phosphate (LiTFOP).

As an example, when the battery is a sodium-ion battery, the electrolyte sodium salt includes at least one of sodium hexafluorophosphate, sodium difluoro(oxalato)borate, sodium tetrafluoroborate, sodium bis(oxalato)borate, sodium perchlorate, sodium hexafluoroarsenate, sodium bis(fluorosulfonyl)imide, sodium trifluoromethanesulfonate, and sodium bis(trifluoromethylsulfonyl)imide.

As an example, the solvent may include at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1, 4-butyrolactone (GBL), sulfolane (SF), methyl sulfonyl methane (MSM), ethyl methyl sulfone (EMS), and ethyl sulfonyl ethane (ESE).

In some implementations of the present application, the electrolyte solution further includes additives. For example, the additive may include a cathode film-forming additive or an anode film-forming additive, and may further include an additive capable of improving specific performance of a battery, for example, an additive for improving overcharge performance of a battery, an additive for improving high-temperature, and an additive for improving low-temperature performance of a battery.

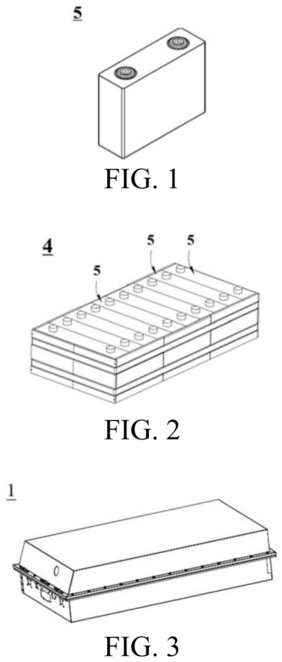

The shape of a battery cell is not particularly limited in the embodiments of the present application, and may be a cylindrical shape, a square shape, or any other shape. FIG. 1 shows a battery cell 5 with a square structure as an example.

In some embodiments, the battery cell may include an outer package. The outer package is used to package an anode plate, a cathode plate, and an electrolyte.

In some embodiments, the outer package may include a housing, and a cover plate. The housing may include a bottom plate and side plates connected to the bottom plate, and the bottom plate and the side plates may define an accommodating chamber. The housing has an opening communicating with the accommodating chamber, and the cover plate can cover the opening to close the accommodating chamber.

The positive electrode sheet, the negative electrode sheet, and the separator may be formed into an electrode assembly through a winding process or a lamination process. The electrode assembly is packaged within the accommodating chamber. The battery cell may have one or more electrode assemblies, and the number may be adjusted as needed.

In some implementations, the outer package of the battery cell may include a hard casing, for example, a hard plastic casing, an aluminum casing, or a steel casing.

The outer package of the battery cell may alternatively include a soft package, such as a pouch-type soft package. The material of the soft package may be a plastic, such as at least one of polypropylene (PP), polybutylene terephthalate (PBT), and polybutylene succinate (PBS).

In some implementations, battery cells may be assembled into a battery module. The battery module may include a plurality of battery cells, and the specific number of the battery cells may be adjusted according to application and capacity of the battery module.

FIG. 2 shows a battery module 4 as an example. Referring to FIG. 2, in the battery module 4, a plurality of battery cells 5 may be arranged sequentially in the length direction of the battery module 4. Certainly, the plurality of battery cells may alternatively be arranged in any other manner. Further, the plurality of battery cells 5 may be fastened by using fasteners.

The battery module 4 may further include a casing having an accommodating space in which the plurality of battery cells 5 are accommodated. In some embodiments, the above battery module may be further assembled into a battery pack. The number of battery modules contained in the battery pack may be adjusted according to the application and capacity of the battery pack.

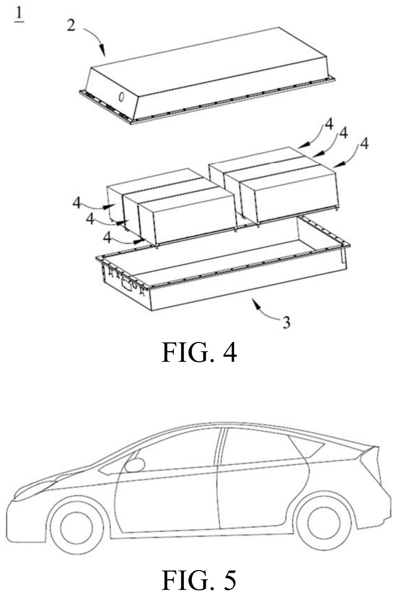

FIG. 3 and FIG. 4 show a battery pack 1 as an example. Referring to FIG. 3 and FIG. 4, a battery case and a plurality of battery modules 4 disposed in the battery case may be included in the battery pack 1. The battery case includes an upper case 2 and a lower case 3, the upper case 2 being capable of covering the lower case 3 and forming a closed space for accommodating the battery modules 4. The plurality of battery modules 4 may be arranged in any manner in the battery box.

A fourth aspect of the present application provides an electric device, including the battery described in the third aspect. Specifically, the battery may be used as a power source for the electric device, or as an energy storage unit for the electric device. The electric device may include, but is not limited to, mobile equipment (such as a cell phone or a notebook computer), an electric vehicle (such as a battery electric vehicle, a hybrid electric vehicle, a plug-in hybrid electric vehicle, an electric bicycle, an electric scooter, an electric golf cart, or an electric truck), an electric train, ship, or satellite, or an energy storage system.

FIG. 5 shows an electric device as an example. The electric device includes a battery electric vehicle, a hybrid electric vehicle, or a plug-in hybrid electric vehicle.

As another example, the electric device may include a cell phone, a tablet computer, or a notebook computer. Generally, the electrical device is compact, and may use a battery as a power source.

In order to make the technical problems, technical solutions, and advantageous effects solved by the embodiments of the present application clearer, the following will be further described in detail with reference to the embodiments and the accompanying drawings. Apparently, the described embodiments are only a part of the embodiments of the present application, and not all of the embodiments. The following description of at least one exemplary embodiment is merely illustrative in nature and is in no way intended as any limitation on the present application and its applications. All other embodiments obtained by those of ordinary skill in the art based on the embodiments of the present application without making creative efforts shall fall within the protection scope of the present application.

### Embodiment 1

### [Preparation of separator]

### (1) Preparation of polysilsesquioxane

In a 5L flask equipped with a stirrer, a thermometer and a reflux condenser, 3000g of deionized water and 2g of hydrochloric acid were added, stirring was started and 315.5g of methyltrimethoxysilane was added, after hydrolysis reaction at 25°C for 1h, 10g of triethylamine was added, and heating and reaction were continued for 12h to obtain a white viscous solution, which was washed with deionized water until neutral, then dried and ground to obtain polysilsesquioxane.

### (2) Preparation of separator

A commercially available PE (polyethylene) polymer microporous film with a thickness of 7 µm and an average pore size of 0.08 µm (from Zhuogao Electronic Technology Co., Ltd.) was used as the base film. 850 g of deionized water was added to the polysilsesquioxane obtained in step (1) and a polyacrylic acid binder, both of which were in a mass ratio of 10:1 and weigh 150 g in total, and the mixture was uniformly stirred and mixed to obtain a slurry. The slurry was coated on the base film, and the film was dried in an oven and then wound up to obtain a separator, where the coating density of the polysilsesquioxane and the binder on the base film was 0.5 g/m². Specific implementation parameters are shown in Table 1.

### [Preparation of positive electrode sheet]

Polyvinylidene fluoride (PVDF), lithium iron phosphate (LFP), a conductive agent of carbon black, and N-methylpyrrolidone (NMP) were fully stirred and uniformly mixed according to a mass ratio of 1.2:58.38:0.42:40 to prepare a positive electrode slurry. The positive electrode slurry was uniformly coated at a load of 200 g/m² onto a positive electrode current collector of an aluminum foil, and then dried, cold pressed and cut to obtain the positive electrode sheet.

### [Preparation of negative electrode sheet]

Artificial graphite, a conductive agent of acetylene black, a binder of styrene-butadiene rubber (SBR), and a thickener of sodium carboxymethyl cellulose (CMC-Na) were added to deionized water in a mass ratio of 96.2:1.0:1.6:1.2, and after the mixture was fully stirred and uniformly mixed, a negative electrode slurry (a solid content of 63%) was prepared. The negative electrode slurry was uniformly coated at a load of 98 g/m² onto a negative current collector of a copper foil, and then dried, cold pressed, and cut to obtain the negative electrode sheet.

### [Preparation of electrolyte solution]

At 25°C, ethylene carbonate (EC), ethyl methyl carbonate (EMC), and diethyl carbonate (DEC) were mixed in a volume ratio of 1:1:1 to obtain a mixed solvent, and then LiPF₆ was dissolved in the above mixed solvent to obtain an electrolyte solution, with the concentration of LiPF₆ being 1 mol/L.

The positive electrode sheet, the separator, and the negative electrode sheet were sequentially stacked and wound, and molded to obtain a cell. The cell was placed in an outer package, and the prepared electrolyte solution was added, and subjected to procedures such as packaging, standing, formation, and aging to obtain a battery.

Except that the parameters in Embodiments 2 to 37 are different from those in Embodiment 1 (see Table 1), remaining conditions in Embodiments 2 to 37 are the same as those in Embodiment 1.

### Embodiment 38

### [Preparation of separator]

### (1) Preparation of polysilsesquioxane

In a 5L flask equipped with a stirrer, a thermometer and a reflux condenser, 3000g of deionized water and 2g of hydrochloric acid were added, stirring was started and 315.5g of methyltrimethoxysilane was added, after hydrolysis reaction at 25°C for 1h, 10g of triethylamine was added, and heating and reaction were continued for 12h to obtain a white viscous solution, which was washed with deionized water until neutral, then dried and ground to obtain polysilsesquioxane.

### (2) Preparation of separator

A. The raw materials such as polysilsesquioxane and polyethylene obtained in step (1) were pretreated according to the formula and then transported to an extrusion system. 2). Casting: The pretreated raw materials were melted and plasticized in the extrusion system, and then a melt separator was extruded from a die head, and the melt was cast to form a base film with a specific crystal structure. 3). Heat treatment: The base film was subjected to heat treatment to obtain a hard elastic film. 4). Stretching: The hard elastic film was subjected to cold stretching and hot stretching to form a nanoporous film. 5). Cutting: The nanoporous film was cut into finished films. The separator has a thickness of 8 µm, an average pore size of 0.08 µm, and a porosity of 50%.

The remaining preparation methods are the same as those in Embodiment 1.

Except that the parameters in Embodiments 39 to 46 are different from those in Embodiment 38 (see Table 1), remaining conditions in Embodiments 39 to 46 are the same as those in Embodiment 38.

Parameters of the separators in Embodiments 1 to 46 and Comparative Examples 1 to 2 of the present application are shown in Table 1. The separator in Comparative Example 1 adopts a commercially available PE (polyethylene) polymer microporous film with a thickness of 7 µm and an average pore size of 0.08 µm (from Zhuogao Electronic Technology Co., Ltd.).

**Table 1**

| | Dᵥ90 particle size/µm | Dᵥ10 particle size/µ m | Dᵥ50 particle size/µm | (a-b)/c | Weight-average molecular weight/ten thousand | Density/ g/cm³ | Thickness of the coating layer/µm | Binder | Mass ratio of the polysilsesqui oxane to the binder | Thickness of the base film/µm | Pore size of the base film/µm | Porosity of the base film | Organosiloxane monomer | Heating temperature /°C |
|---|---|---|---|---|---|---|---|---|---|---|---|---|---|---|
| Embodiment 1 | 0.81 | 0.46 | 0.52 | 0.67 | 3.5 | 1.1 | 1 | Polyacrylic acid | 10:1 | 7 | 0.05 | 50% | Methyltrimethoxysilane | 75 |
| Embodiment 2 | 2.29 | 1.29 | 1.68 | 0.60 | 7.1 | 1.1 | 1 | Polyacrylic acid | 10:1 | 7 | 0.05 | 50% | Methyltrimethoxysilane | 40 |
| Embodiment 3 | 0.72 | 0.36 | 0.44 | 0.82 | 3.2 | 1.1 | 1 | Polyacrylic acid | 10:1 | 7 | 0.05 | 50% | Methyltrimethoxysilane | 80 |
| Embodiment 4 | 1.73 | 1.01 | 1.22 | 0.59 | 5.5 | 1.1 | 1 | Polyacrylic acid | 10:1 | 7 | 0.05 | 50% | Methyltrimethoxysilane | 50 |
| Embodiment 5 | 1.32 | 0.61 | 1.16 | 0.61 | 4.8 | 1.1 | 1 | Polyacrylic acid | 10:1 | 7 | 0.05 | 50% | Methyltrimethoxysilane | 60 |
| Embodiment 6 | 0.93 | 0.49 | 0.68 | 0.65 | 3.9 | 1.1 | 1 | Polyacrylic acid | 10:1 | 7 | 0.05 | 50% | Methyltrimethoxysilane | 70 |
| Embodiment 7 | 4.31 | 1.06 | 2.05 | 1.59 | 8.2 | 1.1 | 1 | Polyacrylic acid | 10:1 | 7 | 0.05 | 50% | Methyltrimethoxysilane | 30 |
| Embodiment 8 | 0.72 | 0.12 | 0.21 | 2.86 | 2.1 | 1.1 | 1 | Polyacrylic acid | 10:1 | 7 | 0.05 | 50% | Methyltrimethoxysilane | 100 |
| Embodiment 9 | 0.65 | 0.17 | 0.26 | 1.85 | 2.8 | 1.1 | 1 | Polyacrylic acid | 10:1 | 7 | 0.05 | 50% | Methyltrimethoxysilane | 90 |
| Embodiment 10 | 0.81 | 0.46 | 0.52 | 0.67 | 3.5 | 1.1 | 0.5 | Polyacrylic acid | 10:1 | 7 | 0.05 | 50% | Methyltrimethoxysilane | 75 |
| Embodiment 11 | 0.81 | 0.46 | 0.52 | 0.67 | 3.5 | 1.1 | 2 | Polyacrylic acid | 10:1 | 7 | 0.05 | 50% | Methyltrimethoxysilane | 75 |
| Embodiment 12 | 0.81 | 0.46 | 0.52 | 0.67 | 3.5 | 1.1 | 0.3 | Polyacrylic acid | 10:1 | 7 | 0.05 | 50% | Methyltrimethoxysilane | 75 |
| Embodiment 13 | 0.81 | 0.46 | 0.52 | 0.67 | 3.5 | 1.1 | 3 | Polyacrylic acid | 10:1 | 7 | 0.05 | 50% | Methyltrimethoxysilane | 75 |
| Embodiment 14 | 0.87 | 0.34 | 0.63 | 0.84 | 3.9 | 1.1 | 1 | Polyacrylic acid | 10:1 | 7 | 0.05 | 50% | Ethyltrimethoxysilane | 75 |
| Embodiment 15 | 1.56 | 0.57 | 1.01 | 0.98 | 4.6 | 1.2 | 1 | Polyacrylic acid | 10:1 | 7 | 0.05 | 50% | Phenyltrimethoxysilane | 75 |
| Embodiment 16 | 0.98 | 0.41 | 0.71 | 0.80 | 3.7 | 1.1 | 1 | Polyacrylic acid | 10:1 | 7 | 0.05 | 50% | Dodecyltrimethoxysila ne | 75 |
| Embodiment 17 | 1.52 | 0.75 | 0.92 | 0.84 | 4.0 | 1.2 | 1 | Polyacrylic acid | 10:1 | 7 | 0.05 | 50% | Vinyltrimethoxysilane | 75 |
| Embodiment 18 | 0.81 | 0.46 | 0.52 | 0.67 | 3.5 | 1.1 | 1 | Polyvinylidene fluoride | 10:1 | 7 | 0.05 | 50% | Methyltrimethoxysilane | 75 |
| Embodiment 19 | 0.81 | 0.46 | 0.52 | 0.67 | 3.5 | 1.1 | 1 | Styrene-butadiene rubber | 10:1 | 7 | 0.05 | 50% | Methyltrimethoxysilane | 75 |
| Embodiment 20 | 0.81 | 0.46 | 0.52 | 0.67 | 3.5 | 1.1 | 1 | Sodium carboxymethylc ellulose | 10:1 | 7 | 0.05 | 50% | Methyltrimethoxysilane | 75 |
| Embodiment 21 | 0.81 | 0.46 | 0.52 | 0.67 | 3.5 | 1.1 | 1 | Polyacrylic acid | 8:1 | 7 | 0.05 | 50% | Methyltrimethoxysilane | 75 |
| Embodiment 22 | 0.81 | 0.46 | 0.52 | 0.67 | 3.5 | 1.1 | 1 | Polyacrylic acid | 20:1 | 7 | 0.05 | 50% | Methyltrimethoxysilane | 75 |
| Embodiment 23 | 0.81 | 0.46 | 0.52 | 0.67 | 3.5 | 1.1 | 1 | Polyacrylic acid | 15:1 | 7 | 0.05 | 50% | Methyltrimethoxysilane | 75 |
| Embodiment 24 | 0.81 | 0.46 | 0.52 | 0.67 | 3.5 | 1.1 | 1 | Polyacrylic acid | 5:1 | 7 | 0.05 | 50% | Methyltrimethoxysilane | 75 |
| Embodiment 25 | 0.81 | 0.46 | 0.52 | 0.67 | 3.5 | 1.1 | 1 | Polyacrylic acid | 25:1 | 7 | 0.05 | 50% | Methyltrimethoxysilane | 75 |
| Embodiment 26 | 0.81 | 0.46 | 0.52 | 0.67 | 3.5 | 1.1 | 1 | Polyacrylic acid | 10:1 | 5 | 0.05 | 50% | Methyltrimethoxysilane | 75 |
| Embodiment 27 | 0.81 | 0.46 | 0.52 | 0.67 | 3.5 | 1.1 | 1 | Polyacrylic acid | 10:1 | 18 | 0.05 | 50% | Methyltrimethoxysilane | 75 |
| Embodiment 28 | 0.81 | 0.46 | 0.52 | 0.67 | 3.5 | 1.1 | 1 | Polyacrylic acid | 10:1 | 4 | 0.05 | 50% | Methyltrimethoxysilane | 75 |
| Embodiment 29 | 0.81 | 0.46 | 0.52 | 0.67 | 3.5 | 1.1 | 1 | Polyacrylic acid | 10:1 | 20 | 0.05 | 50% | Methyltrimethoxysilane | 75 |
| Embodiment 30 | 0.81 | 0.46 | 0.52 | 0.67 | 3.5 | 1.1 | 1 | Polyacrylic acid | 10:1 | 7 | 0.03 | 50% | Methyltrimethoxysilane | 75 |
| Embodiment 31 | 0.81 | 0.46 | 0.52 | 0.67 | 3.5 | 1.1 | 1 | Polyacrylic acid | 10:1 | 7 | 0.06 | 50% | Methyltrimethoxysilane | 75 |
| Embodiment 32 | 0.81 | 0.46 | 0.52 | 0.67 | 3.5 | 1.1 | 1 | Polyacrylic acid | 10:1 | 7 | 0.02 | 50% | Methyltrimethoxysilane | 75 |
| Embodiment 33 | 0.81 | 0.46 | 0.52 | 0.67 | 3.5 | 1.1 | 1 | Polyacrylic acid | 10:1 | 7 | 0.08 | 50% | Methyltrimethoxysilane | 75 |
| Embodiment 34 | 0.81 | 0.46 | 0.52 | 0.67 | 3.5 | 1.1 | 1 | Polyacrylic acid | 10:1 | 7 | 0.05 | 35% | Methyltrimethoxysilane | 75 |
| Embodiment 35 | 0.81 | 0.46 | 0.52 | 0.67 | 3.5 | 1.1 | 1 | Polyacrylic acid | 10:1 | 7 | 0.05 | 65% | Methyltrimethoxysilane | 75 |
| Embodiment 36 | 0.81 | 0.46 | 0.52 | 0.67 | 3.5 | 1.1 | 1 | Polyacrylic acid | 10:1 | 7 | 0.05 | 30% | Methyltrimethoxysilane | 75 |
| Embodiment 37 | 0.81 | 0.46 | 0.52 | 0.67 | 3.5 | 1.1 | 1 | Polyacrylic acid | 10:1 | 7 | 0.05 | 70% | Methyltrimethoxysilane | 75 |
| Embodiment 38 | 0.81 | 0.46 | 0.52 | 0.67 | 3.5 | 1.1 | / | / | / | / | / | / | Methyltrimethoxysilane | 75 |
| Embodiment 39 | 2.29 | 1.29 | 1.68 | 0.60 | 7.1 | 1.1 | / | / | / | / | / | / | Methyltrimethoxysilane | 40 |
| Embodiment 40 | 0.72 | 0.36 | 0.44 | 0.82 | 3.2 | 1.1 | / | / | / | / | / | / | Methyltrimethoxysilane | 80 |
| Embodiment 41 | 1.73 | 1.01 | 1.22 | 0.59 | 5.5 | 1.1 | / | / | / | / | / | / | Methyltrimethoxysilane | 50 |
| Embodiment 42 | 1.32 | 0.61 | 1.16 | 0.61 | 4.8 | 1.1 | / | / | / | / | / | / | Methyltrimethoxysilane | 60 |
| Embodiment 43 | 0.93 | 0.49 | 0.68 | 0.65 | 3.9 | 1.1 | / | / | / | / | / | / | Methyltrimethoxysilane | 70 |
| Embodiment 44 | 4.31 | 1.06 | 2.05 | 1.59 | 8.2 | 1.1 | / | / | / | / | / | / | Methyltrimethoxysilane | 30 |
| Embodiment 45 | 0.72 | 0.12 | 0.21 | 2.86 | 2.1 | 1.1 | / | / | / | / | / | / | Methyltrimethoxysilane | 100 |
| Embodiment 46 | 0.65 | 0.17 | 0.26 | 1.85 | 2.8 | 1.1 | / | / | / | / | / | / | Methyltrimethoxysilane | 90 |
| Comparative example 1 | / | | | | | | | | | | | | | |
| Comparative Example 2 | 3.63 | 0.34 | 0.94 | 3.50 | 3.5 | 1.1 | 1 | Polyacrylic acid | 10:1 | 7 | 0.05 | 50% | Methyltrimethoxysilane | 110 |

In Table 1, "/" represents no addition.

The structural formulas of the polysilsesquioxanes correspondingly used in the embodiments and comparative examples in Table 1 are shown in Table 2.

**Table 2**

| | Polysilsesquioxane | | Polysilsesquioxane |
|---|---|---|---|
| Embodiment 1 | 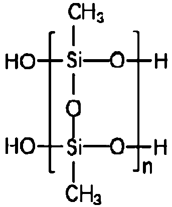 | Embodiment 25 | 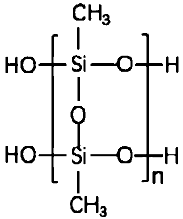 |
| Embodiment 2 | 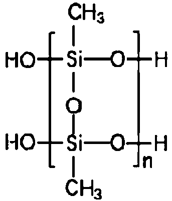 | Embodiment 26 | 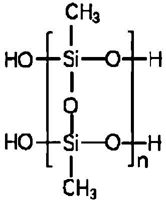 |
| Embodiment 3 | 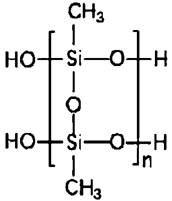 | Embodiment 27 | 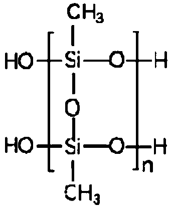 |
| Embodiment 4 | 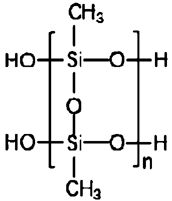 | Embodiment 28 | 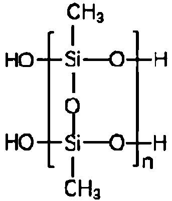 |
| Embodiment 5 | 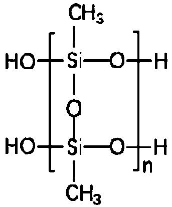 | Embodiment 29 | 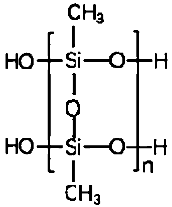 |
| Embodiment 6 | 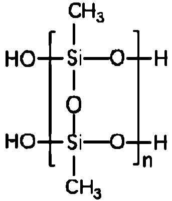 | Embodiment 30 | 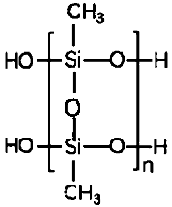 |
| Embodiment 7 | 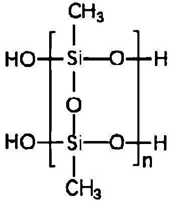 | Embodiment 31 | 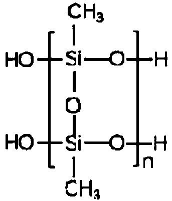 |
| Embodiment 8 | 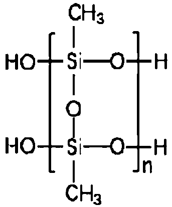 | Embodiment 32 | 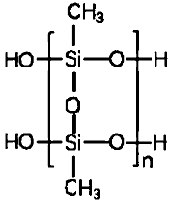 |
| Embodiment 9 | 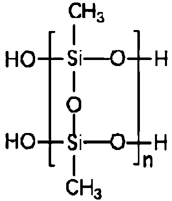 | Embodiment 33 | 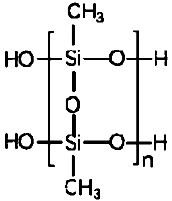 |
| Embodiment 10 | 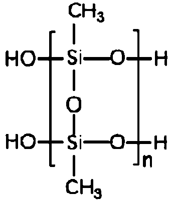 | Embodiment 34 | 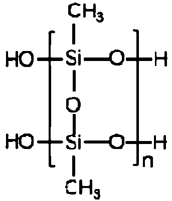 |
| Embodiment 11 | 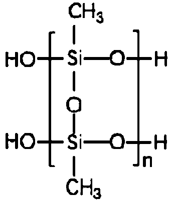 | Embodiment 35 | 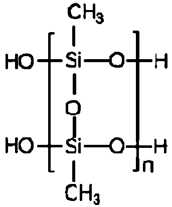 |
| Embodiment 12 | 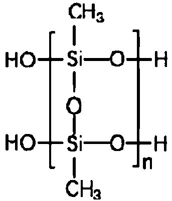 | Embodiment 36 | 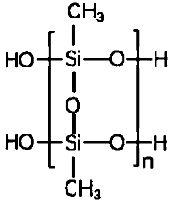 |
| Embodiment 13 | 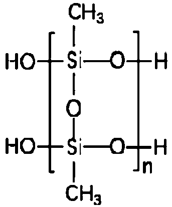 | Embodiment 37 | 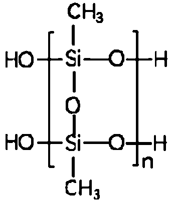 |
| Embodiment 14 | 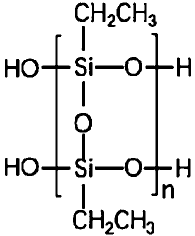 | Embodiment 38 | 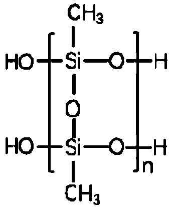 |
| Embodiment 15 | 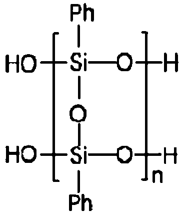 | Embodiment 39 | 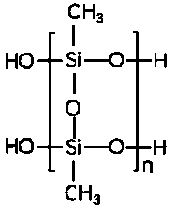 |
| Embodiment 16 | 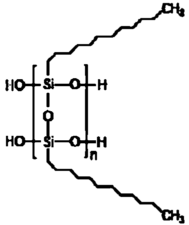 | Embodiment 40 | 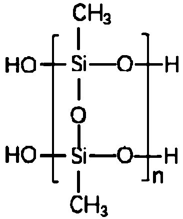 |
| Embodiment 17 | 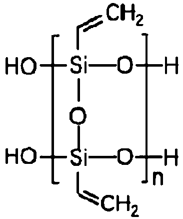 | Embodiment 41 | 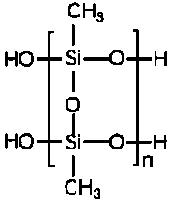 |
| Embodiment 18 | 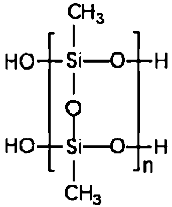 | Embodiment 42 | 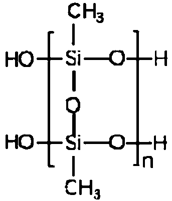 |
| Embodiment 19 | 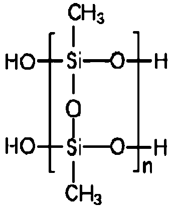 | Embodiment 43 | 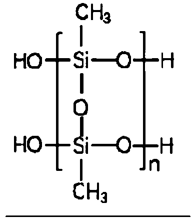 |
| Embodiment 20 | 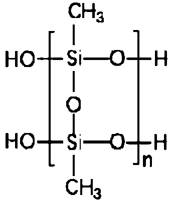 | Embodiment 44 | 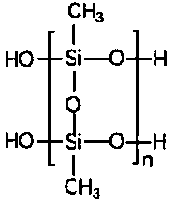 |
| Embodiment 21 | 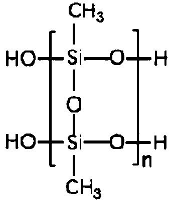 | Embodiment 45 | 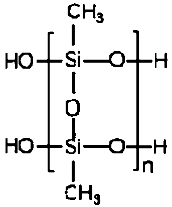 |
| Embodiment 22 | 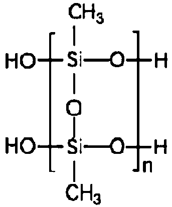 | Embodiment 46 | 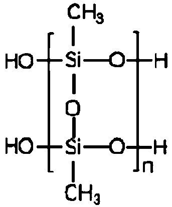 |
| Embodiment 23 | 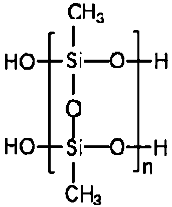 | Comparative example 1 | / |
| Embodiment 24 | 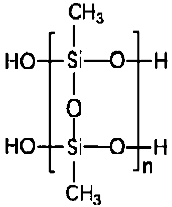 | Comparative Example 2 | 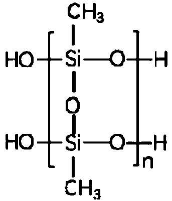 |

### Performance tests:

### 1. Determination of particle size of polysilsesquioxane

Referring to the standard GB/T 19077-2016, determination was performed to separately obtain the Dᵥ90 particle size, the Dᵥ10 particle size, and the Dᵥ50 particle size of the polysilsesquioxane by using a laser particle size analyzer (such as Malvern Master Size 3000).

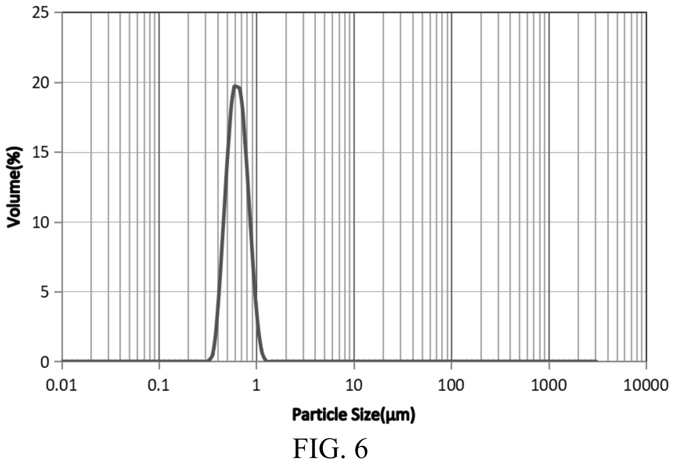

FIG. 6 is a particle size distribution diagram of Embodiment 6 of the present application, and it can be obtained that *a* = 0.93, *b* = 0.49, c = 0.68, (*a*-*b*)/*c* = 0.647. It can be seen that the polysilsesquioxane prepared in Embodiment 6 of the present application has uniform particle size distribution and a uniform particle size.

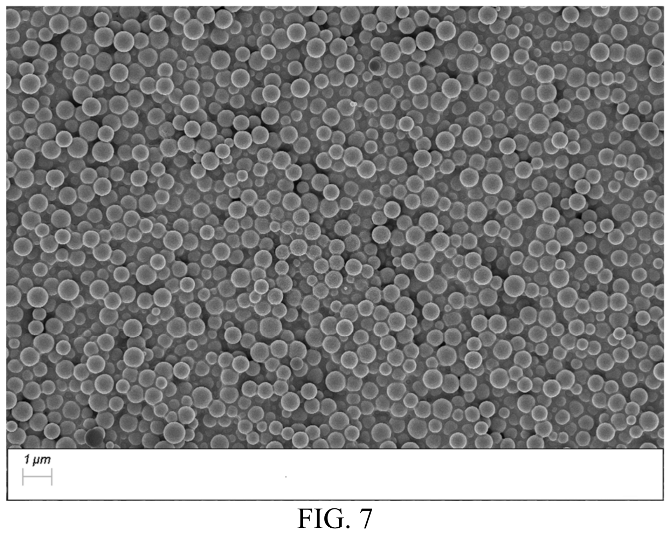

2. Scanning electron microscopy was performed on the polysilsesquioxane prepared in Embodiment 1, and FIG. 7 was obtained, and it can be seen that the polysilsesquioxane prepared in Embodiment 1 of the present application has uniform particle size distribution and a uniform particle size.

### 3. Determination of weight-average molecular weight of polysilsesquioxane

An ultra-high performance polymer chromatograph (ACQUITYAPC) and a detector (ACQUITY differential refractive index detector) were used.

Parameter setting, injection volume: 0 µL to 50 µL (depending on a sample concentration); pump flow rate: 0.2 mL/min; mobile phase: 30 mol/L LiBr in NMP (N-methylpyrrolidone) solution; sealing cleaning liquid: isopropanol; pre-column: PLgel10umMiniMIX-BGuard (size: 50 mm × 4.6 mm × 2); analytical phase: PLgel10umMiniMIX-B (size: 250 mm × 4.6 mm); standard: polystyrene sleeve; running time: 30 min; detector: ACQUITY differential refractive index (RI) detector; column oven temperature: 90°C; and detector temperature: 55°C.

Sample test: a. standard sample and test sample configuration: 0.002 g to 0.004 g of standard sample/test sample was separately weighed and added to 2 mL of mobile phase liquid, mixed standard of 0.1% to 0.5% was prepared, and placed in a refrigerator for > 8h; and b. standard solution/sample test: a sample group to be tested was edited, an established sample group method was selected, and after the baseline is stable, a run queue was clicked and a sample was started testing.

Data processing: based on a relationship between retention time and molecular weight, a calibration curve was established by using a chemical workstation, a sample spectrum was integrated and quantified, and the chemical workstation automatically generated molecular weight and molecular weight distribution results.

### 4. Density determination of polysilsesquioxane

A specific mass of sample was weighed and placed in a true density tester, a test system was sealed, helium was introduced according to a procedure, the pressure of the gas in a sample chamber and an expansion chamber was detected, a real volume was then calculated according to the Bohr's law (PV = nRT), and the density was calculated based on the volume and the mass; and the national standard: GB/T24586 Determination of apparent density, true density and porosity of iron ore.

### 5 Test on thermal shrinkage ratio of separator

Sample preparation: the above prepared separator was punched with a punch into samples with a width of 50 mm and a length of 100 mm, 5 parallel samples were taken and placed on A4 paper, and then the A4 paper with the samples was placed on corrugated paper with a thickness of 1 mm to 5 mm.

Sample testing: The temperature of a blast oven was set to 150°C. After the temperature reached a set temperature and was stabilized for 30 min, the A4 paper placed on the corrugated paper was placed into the blast oven, and timing was started. After the set time (1 h in the present application) was reached, the length and width of the separator were measured, and the values were marked as *m* and *n,* respectively.

Calculation of thermal shrinkage ratios: a thermal shrinkage ratio in the machine direction (MD) *=* [(100-*m*)/100] × 100%, a thermal shrinkage ratio in the transverse direction (TD) = [(50-*n*)/50] × 100%, an average value of 5 parallel samples was taken as a test result.

### 6. Test on capacity retention ratio of secondary battery (cycle performance)

At 25°C, the secondary battery was charged at a constant current of 1/3 C to 3.6 V, then charged at a constant voltage of 3.6 V to a current of 0.05 C, and left for 5 min, and then discharged at 1/3 C to 2.5 V, and the obtained capacity was denoted as an initial capacity C0. The above steps were repeated, and a discharge capacity C1000 of the secondary battery after the 1000th cycle was recorded at the same time, a capacity retention ratio of the secondary battery after the 1000 th cycle was P1000 = C1000/C0 × 100%. The results were shown in Table 3.

**Table 3**

| | 150°C/1h Thermal shrinkage ratio (%) | | Capacity retention ratio (%) |
|---|---|---|---|
| | Machine direction (MD) | Transverse direction (TD) | |
| Embodiment 1 | 0.76 | 0.64 | 94.5 |
| Embodiment 2 | 0.55 | 0.51 | 92.3 |
| Embodiment 3 | 0.63 | 0.58 | 93.2 |
| Embodiment 4 | 0.46 | 0.39 | 93.6 |
| Embodiment 5 | 0.85 | 0.69 | 94.1 |
| Embodiment 6 | 0.78 | 0.67 | 94.3 |
| Embodiment 7 | 1.26 | 1.06 | 90.4 |
| Embodiment 8 | 0.93 | 0.73 | 86.2 |
| Embodiment 9 | 1.05 | 0.85 | 89.3 |
| Embodiment 10 | 0.36 | 0.25 | 93.4 |
| Embodiment 11 | 0.63 | 0.53 | 92.5 |
| Embodiment 12 | 1.56 | 1.32 | 91.3 |
| Embodiment 13 | 1.02 | 0.88 | 88.2 |
| Embodiment 14 | 0.82 | 0.71 | 94.2 |
| Embodiment 15 | 0.78 | 0.62 | 94.3 |
| Embodiment 16 | 0.84 | 0.72 | 94.1 |
| Embodiment 17 | 0.79 | 0.72 | 93.9 |
| Embodiment 18 | 0.72 | 0.67 | 94.5 |
| Embodiment 19 | 0.81 | 0.62 | 94.3 |
| Embodiment 20 | 0.78 | 0.69 | 94.2 |
| Embodiment 21 | 0.79 | 0.68 | 94.2 |
| Embodiment 22 | 0.95 | 0.88 | 93.4 |
| Embodiment 23 | 0.62 | 0.47 | 95.1 |
| Embodiment 24 | 1.25 | 1.01 | 92.6 |
| Embodiment 25 | 1.74 | 1.52 | 89.2 |
| Embodiment 26 | 0.42 | 0.36 | 93.2 |
| Embodiment 27 | 0.52 | 0.43 | 92.1 |
| Embodiment 28 | 1.85 | 1.43 | 91.6 |
| Embodiment 29 | 1.05 | 0.73 | 90.3 |
| Embodiment 30 | 0.81 | 0.7 | 93.2 |
| Embodiment 31 | 0.78 | 0.69 | 94.1 |
| Embodiment 32 | 0.96 | 0.76 | 92.6 |
| Embodiment 33 | 0.89 | 0.73 | 92.6 |
| Embodiment 34 | 0.65 | 0.6 | 92.4 |
| Embodiment 35 | 0.53 | 0.42 | 92.7 |
| Embodiment 36 | 0.84 | 0.72 | 90.8 |
| Embodiment 37 | 1.36 | 1.02 | 90.5 |
| Embodiment 38 | 0.97 | 0.72 | 92.6 |
| Embodiment 39 | 0.56 | 0.57 | 88.6 |
| Embodiment 40 | 0.82 | 0.73 | 90.4 |
| Embodiment 41 | 0.74 | 0.61 | 90.7 |
| Embodiment 42 | 0.89 | 0.80 | 92.2 |
| Embodiment 43 | 1.02 | 0.80 | 90.5 |
| Embodiment 44 | 1.50 | 1.27 | 89.4 |
| Embodiment 45 | 1.27 | 0.97 | 87.3 |
| Embodiment 46 | 1.14 | 0.86 | 88.4 |
| Comparative example 1 | 2.98 | 2.42 | 80.1 |
| Comparative Example 2 | 1.98 | 1.85 | 85.5 |

It can be seen from Table 3 that, in Embodiments 1 to 46 of the present application, the polysilsesquioxane was added to the separator, and the particle size distribution of the polysilsesquioxane was controlled, a shrinkage ratio of the separator was small and the cycle performance of the battery was excellent; and compared with Embodiments 1 to 46, the separator in Comparative Example 1 did not add polysilsesquioxane but adopted a polyethylene film, and the particle size distribution of the polysilsesquioxane in Comparative Example 2 was not within the range of ≤ 3, the thermal shrinkage ratio of the separator was significantly increased, and the cycle performance of the battery was significantly reduced. It can be seen that, by adopting the separator in the embodiments of the present application, the thermal resistance and the stability of the separator were good, and the cycle life of the battery was excellent.

Finally, it should be noted that the above embodiments are only for the purpose of illustrating the technical solutions of the present application and are not to be construed as limiting the present application. Although the present application has been described in detail with reference to the above embodiments, it should be understood by a person of ordinary skill in the art that modifications may be made to the technical solutions described in the above embodiments, or equivalent replacement may be made to some or all of the technical features thereof. However, the modifications or replacements do not make the nature of corresponding technical solutions depart from the scope of the technical solutions of the embodiments of the present application, all of which shall fall within the scope of the claims and the description of the present application. In particular, the technical features mentioned in the embodiments may be combined in any manner provided that no structural conflict is present. The present application is not limited to the specific embodiments disclosed herein, but includes all technical solutions falling within the scope of the claims.

## Claims

1. A separator, comprising polysilsesquioxane, wherein the polysilsesquioxane has a Dᵥ90 particle size of *a* µm, a Dᵥ10 particle size of *b* µm, and a Dᵥ50 particle size of c µm, and (*a*-*b*)/*c* ≤ 3.

2. The separator according to claim 1, wherein 0.4 ≤ (*a*-*b*)/*c* ≤ 1.5.

3. The separator according to claim 1 or 2, wherein *a* = 0.5 to 5, and optionally *a* = 0.6 to 2.5.

4. The separator according to any one of claims 1 to 3, wherein *b =* 0.05 to 1.5, and optionally *b* = 0.1 to 1.3.

5. The separator according to any one of claims 1 to 4, wherein c = 0.1 to 3, and optionally c = 0.4 to 1.7.

6. The separator according to any one of claims 1 to 5, wherein the polysilsesquioxane has a weight-average molecular weight of 10,000 to 100,000, optionally 30,000 to 80,000.

7. The separator according to any one of claims 1 to 6, wherein the polysilsesquioxane has a density of 1 g/cm³ to 1.3 g/cm³, optionally 1 g/cm³ to 1.2 g/cm³.

8. The separator according to any one of claims 1 to 7, wherein the structural formula of the polysilsesquioxane comprises: 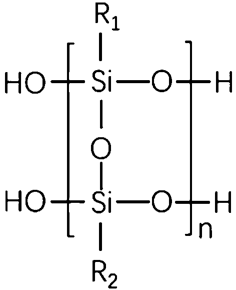 wherein *R₁* and *R₂* each independently comprise an alkyl group having 1 to 12 carbon atoms, an unsaturated hydrocarbon group having 1 to 12 carbon atoms or a phenyl group, and *n =* 50 to 1000.

9. The separator according to any one of claims 1 to 8, wherein the polysilsesquioxane comprises at least one of the following structural formulas: 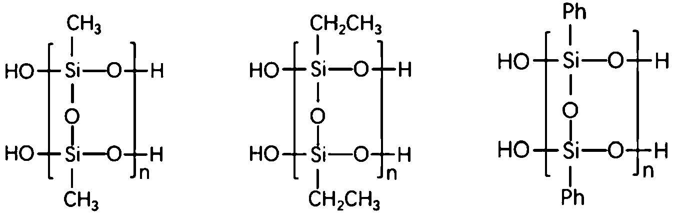 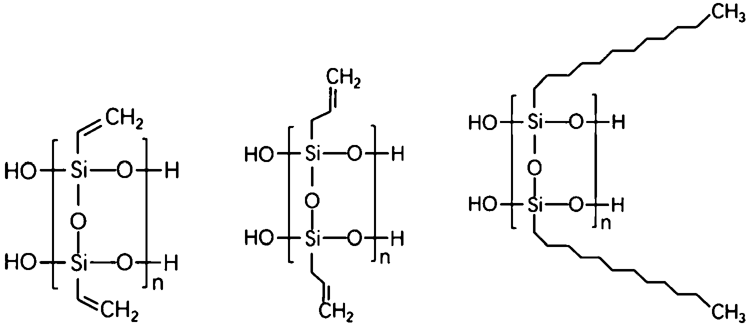 wherein Ph represents a phenyl group, and *n* = 50 to 1000.

10. The separator according to any one of claims 1 to 9, wherein the separator comprises a base film and a coating layer located on at least one side of the base film, and the coating layer comprises the polysilsesquioxane.

11. The separator according to claim 10, wherein the coating layer has a thickness of 0.3 µm to 3 µm, optionally 0.5 µm to 2 µm.

12. The separator according to claim 10 or 11, wherein the coating layer further comprises a binder, and the binder comprises at least one of polyacrylic acid, polyacrylate, polyvinylidene fluoride, styrene-butadiene rubber, sodium carboxymethyl cellulose, polytetrafluoroethylene, vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer or fluorine-containing acrylate resin.

13. The separator according to claim 12, wherein the mass ratio of the polysilsesquioxane to the binder is (5 to 25):1, optionally (8 to 20):1.

14. The separator according to any one of claims 10 to 13, wherein at least one of the following conditions is met:
the base film has a thickness of 4 µm to 20 µm, optionally 5 µm to 18 µm;
the base film has a pore size of 0.02 µm to 0.08 µm, optionally 0.03 µm to 0.06 µm; or
the base film has a porosity of 30% to 70%, optionally 35% to 65%.

15. A preparation method for a separator, comprising:
preparing a separator containing polysilsesquioxane, wherein the polysilsesquioxane has a Dᵥ90 particle size of *a* µm, a Dᵥ10 particle size of *b* µm, and a Dᵥ50 particle size of c µm, and (*a-b*)/*c* ≤ 3.

16. The method according to claim 15, comprising:
preparing a coating layer on at least one side of a base film to obtain a separator, wherein the coating layer comprises the polysilsesquioxane.

17. The method according to claim 15 or 16, wherein the polysilsesquioxane is prepared by using the following method:
hydrolyzing organosiloxane monomer, adding a catalyst, and performing polycondensation under a heating condition to obtain the polysilsesquioxane.

18. The method according to claim 17, wherein the temperature of hydrolysis of the organosiloxane monomer is 20°C to 30°C.

19. The method according to claim 17 or 18, wherein the heating temperature is 30°C to 100°C, optionally 40°C to 80°C.

20. The method according to any one of claims 17 to 19, wherein the catalyst comprises at least one of aqueous ammonia, triethylamine, sodium hydroxide, magnesium hydroxide, or ammonium hydroxide.

21. The method according to any one of claims 17 to 20, wherein the organosiloxane monomer comprises: 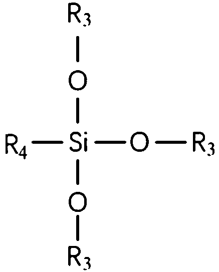 wherein *R₃* comprises any one of a methyl group or an ethyl group, and *R₄* comprises any one of a methyl group, an ethyl group, a phenyl group, a vinyl group, an allyl group, or a dodecyl group.

22. The method according to any one of claims 17 to 21, wherein the organosiloxane monomer comprises at least one of methyltrimethoxysilane, ethyltrimethoxysilane, phenyltrimethoxysilane, dodecyltrimethoxysilane, vinyltrimethoxysilane, allyltrimethoxysilane, methyltriethoxysilane, ethyltriethoxysilane, phenyltriethoxysilane, dodecyltriethoxysilane, vinyltriethoxysilane, or allyltriethoxysilane.

23. A battery, comprising the separator according to any one of claims 1 to 14 or the separator prepared by using the method according to any one of claims 15 to 22.

24. An electric device, comprising the battery according to claim 23.
